# FASCICULE DE BREVET EUROPEEN

(11) **EP 2 108 499 B1**
(45) Date de publication et mention de la délivrance du brevet: **15.08.2012**
(21) Numéro de dépôt: 09008199.3
(22) Date de dépôt: 25.06.2007
(51) Int. Cl.: B29C 49/42

(54) **Perfectionnements aux fonds de moule**
Perfektionierungen von Backformböden
Improvements of mould bottoms

(30) Priorité: 26.06.2006 FR 0605696
(43) Date de publication de la demande: 14.10.2009
(62) Demande divisionnaire de: 07788924.4
(73) Titulaire: Sidel Participations, 76930 Octeville Sur Mer (FR)
(72) Inventeur: Dagorn, Daniel, 76930 Octeville-sur-Mer (FR); Lemble, Thierry, 76930 Octeville-sur-Mer (FR); Saleix, Julien, 76930 Octeville Sur Mer (FR); Tarissan, Fabrice, 76930 Octeville Sur Mer (FR)
(74) Mandataire: Louiset, Raphael

(56) Documents cités:
- WO-A-03/033242
- US-A- 5 255 889
- US-A1- 2006 003 045

## Description

L'invention se rapport au domaine de la fabrication des récipients, notamment par soufflage ou étirage soufflage.

Le soufflage des récipients a lieu dans un moule, muni d'une cavité dans laquelle on introduit une ébauche (généralement en matière thermoplastique) préalablement chauffée, cette ébauche étant mise sous pression pour lui conférer une forme souhaitée correspondant à celle de la cavité.

Les moules modernes sont généralement en trois parties : deux demi-moules, articulés dans un plan perpendiculaire à un axe principal du moule, soit en translation soit en rotation autour d'une charnière commune (le moule étant alors dit du type « portefeuille »), et un fond de moule déplaçable parallèlement à l'axe du moule.

Les moules sont généralement régulés en température, soit pour leur refroidissement dans les applications les plus courantes, soit pour leur chauffe dans les applications du type HR (Heat Resistant), dans lesquelles les récipients subissent une thermofixation consistant à les maintenir temporairement dans le moule chauffé pour les rendre mécaniquement résistants à la rétractation lors d'un remplissage à chaud. Des conduits pour la circulation d'un fluide caloporteur (en général de l'huile ou de l'eau) sont à cet effet ménagés dans les demi-moules, et dans le fond de moule voire par exemple US 2006003045 A1, US 5255889 A1 et WO 03033242 A1.

Dans une configuration ouverte, les deux demi-moules sont écartés l'un de l'autre et le fond de moule se trouve dans une position basse, ce qui permet l'évacuation d'un récipient formé et l'introduction d'une nouvelle ébauche. Dans une configuration fermée, le fond de moule est dans une position haute et les deux demi-moules sont refermés sur lui.

Afin de permettre l'interchangeabilité du fond de moule pour autoriser la fabrication de récipients de gammes (et de formes) différentes au sein d'une même machine, le fond de moule est ordinairement fixé de manière amovible sur un support coulissant, muni d'un conduit d'arrivée du fluide caloporteur, et d'un conduit d'évacuation. Un dispositif de fixation avec raccord fluidique permet d'assurer la fixation amovible du fond de moule sur la sellette, tout en assurant la continuité étanche des circulations du fluide caloporteur.

Selon une technologie connue voire par exemple GB 2201727, utilisée jusqu'à ce jour par la demanderesse et illustrée sur la figure 9, le fond de moule (non représenté) est fixé sur une interface formant une partie mâle, munie d'un embout 100 s'étendant en saillie au centre de l'interface du côté opposé au fond de moule, cet embout 100 venant se loger dans un trou 110 ménagé au centre du support 120. Des billes 130, actionnées de manière pneumatique via un verrou 140 monté sur ressorts 150, viennent coopérer radialement avec une portée tronconique 160 de l'embout 100 pour bloquer celui-ci par rapport au support 120. Les billes 110 sont bloquées en position au moyen d'une rampe 170 tronconique formée sur le verrou 140, lequel est monté en translation dans une chambre 180 annulaire dans laquelle débouche une canalisation 190 d'amenée d'air sous pression.

Le raccord fluidique est réalisé au moyen de deux embouts cylindriques déportés (non représentés) : l'un pour l'arrivée, l'autre pour l'évacuation du fluide, prévus en saillie sur l'interface et venant se loger dans des trous ménagés en regard dans le support, ces trous constituant les extrémités du conduit d'arrivée et du conduit d'évacuation, respectivement.

Un inconvénient de cette technologie, qui a donné et continue de donner satisfaction, est que la présence de l'embout central sur l'interface ne permet ni de poser, ni de stocker le fond de moule sans risquer de heurter l'embout, ce qui en le désaxant pourrait rendre son introduction dans la sellette difficile, voire impossible, empêchant ainsi le couplage du fond de moule et du support. La demanderesse a donc souhaité proposer une solution alternative qui remédie notamment à cet inconvénient.

À cet effet, l'invention propose un dispositif comprenant un fond de moule présentant, sur une face supérieure, une empreinte en creux correspondant à un fond de récipient, ce dispositif comprenant en outre :
- une couronne cylindrique munie, à une extrémité opposée au fond de moule, d'un bourrelet annulaire en saillie radiale définissant une portée tronconique, et
- un logement central pour le montage d'une partie d'un raccord fluidique.

Un conduit peut être prévu pour la circulation d'un fluide caloporteur, creusé par exemple en spirale dans une face inférieure du fond de moule.

Selon un mode de réalisation, le logement central se prolonge par une chambre d'arrivée de fluide débouchant dans une portion centrale du conduit, dont une portion périphérique peut être reliée au logement par un canal pour former une chambre d'évacuation du fluide. Le logement central est par exemple formé d'une succession d'alésages.

Par ailleurs, le dispositif comprend de préférence une semelle, dans laquelle le logement central peut être formé, et sur laquelle sont fixés, à l'opposé l'un de l'autre, le fond de moule et la couronne. Cette semelle présente par exemple, sur son pourtour, une collerette.

Un pion de centrage désaxé peut en outre être prévu.

D'autres objets et avantages de l'invention apparaîtront à la lumière de la description faite ci-après en référence aux dessins annexés dans lesquels :
- la figure 1 est une vue en perspective, environ à l'échelle 1, montrant un fond de moule fixé sur un support ;
- la figure 2 est une vue d'élévation en coupe, environ à l'échelle 1, du fond de moule et du support, séparés l'un de l'autre ;
- la figure 3 est une vue analogue à la figure 2, où l'on a représenté en outre le raccord fluidique ;
- la figure 4 est une vue montrant à échelle élargie un détail du support dans la configuration de la figure 2 ou de la figure 3 ;
- la figure 5 est une vue d'élévation en coupe, environ à l'échelle 1, du fond de moule et du support, couplés l'un à l'autre ;
- la figure 6 est une vue analogue à la figure 5, où l'on a représenté en outre le raccord fluidique ;
- la figure 7 est une vue montrant à échelle élargie un détail du support dans la configuration de la figure 5 ou de la figure 6 ;
- la figure 8 est une vue montrant à échelle élargie le raccord fluidique dans la configuration de la figure 6 ;
- la figure 9 est une vue en coupe d'un dispositif de fixation d'un fond de moule sur un support, conformément à l'art antérieur décrit ci-dessus.

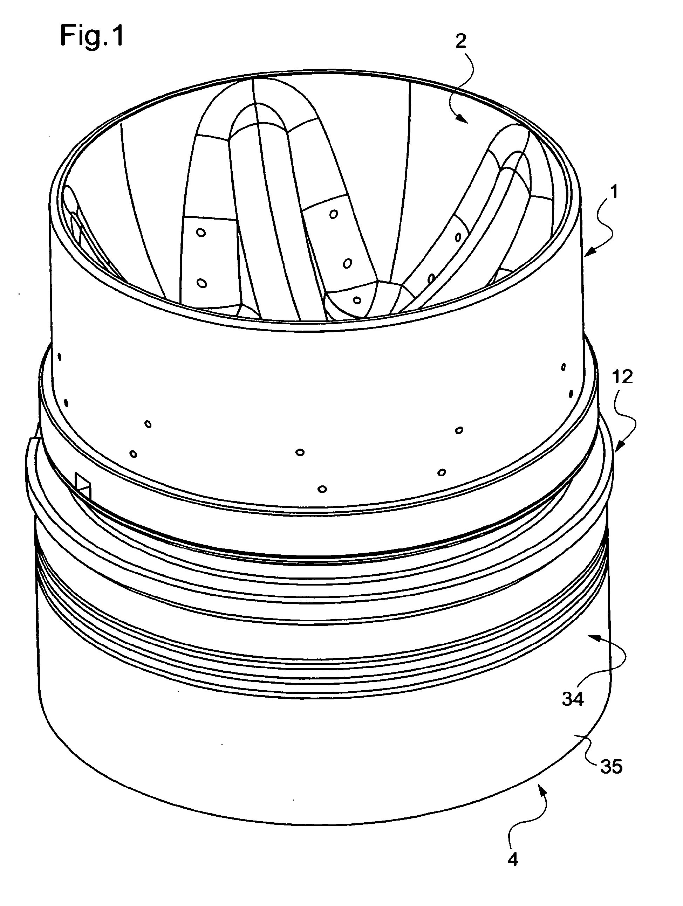

Sur la figure 1 est représenté un fond de moule **1** qui se présente sous la forme d'un bloc de métal (en acier ou dans un alliage d'aluminium) présentant, sur une face supérieure, une empreinte **2** en creux destinée à conférer sa forme au fond d'un récipient.

Grâce à un dispositif 3 de fixation amovible, le fond de moule **1** est monté de manière rigide mais non permanente sur un support **4,** ci-après dénommé sellette, mobile suivant une direction axiale confondue avec un axe **A** général de symétrie du fond de moule 1 et de la sellette **4.**

Le fond **1** est muni d'un conduit **5** pour la circulation d'un fluide caloporteur, creusé en spirale - ou, en variante, en portions de cercles concentriques - dans une face inférieure du fond **1,** opposée à l'empreinte **2.**

Le dispositif **3** de fixation comprend une partie mâle **6** et une partie femelle **7.** Suivant un mode de réalisation, la partie femelle **7** est portée par le fond de moule **1** et la partie mâle **6** par la sellette **4.** Suivant un mode de réalisation préféré correspondant à la présente description, la partie femelle **7** est portée par la sellette **4,** et la partie mâle **6** par le fond de moule **1.**

La partie mâle **6** comprend une couronne **8** cylindrique munie, à une extrémité opposée au fond de moule **1,** d'un bourrelet **9** annulaire en saillie radiale vers l'extérieur, définissant une portée **10** tronconique. La partie mâle **6** comprend en outre un pion **11** de centrage désaxé.

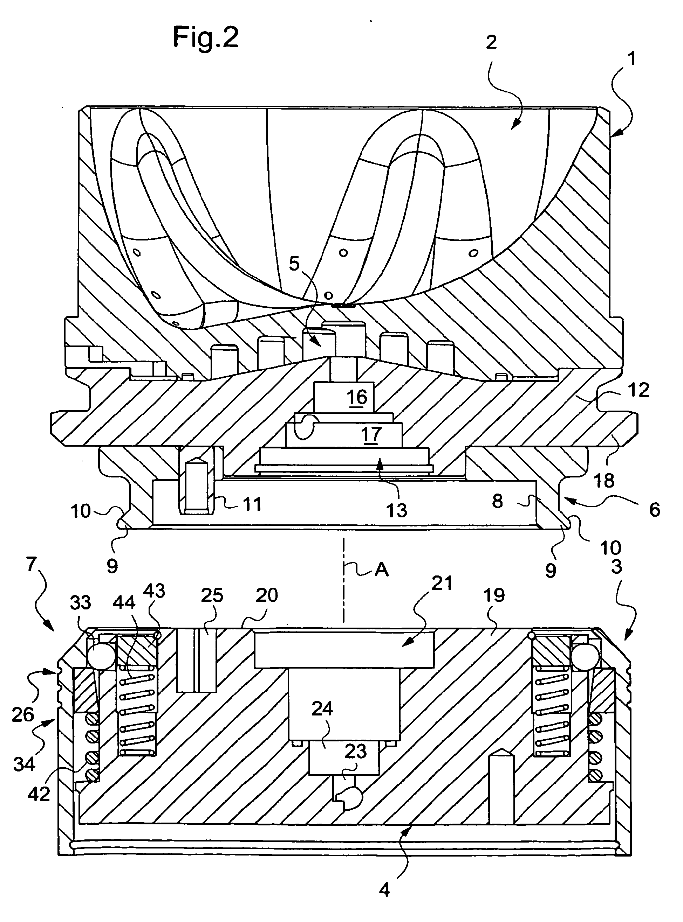

Le fond de moule **1** et la couronne **8** sont tous deux fixés, à l'opposé l'un de l'autre, sur une semelle **12** qui forme interface entre le fond de moule **1** et la sellette **4.** Comme cela est visible sur la figure **2****,** la semelle **12** est pourvue en son centre d'une succession d'alésages formant un logement **13** pour une partie mâle **14** d'un raccord **15** fluidique. Le logement **13** se prolonge par une chambre **16** d'arrivée débouchant dans une portion centrale du conduit **5.**

Une portion périphérique du conduit **5** est par ailleurs reliée au logement **13** par un canal percé dans la semelle **12** et débouchant dans l'un des alésages qui forme ainsi une chambre d'évacuation **17** du fluide ayant circulé dans le conduit **5.**

La semelle **12** est munie sur son pourtour d'une collerette **18** sur laquelle viennent s'emboîter deux demi-moules (non représentés). Un chanfrein assure le centrage mutuel du fond de moule **1** et des demi-moules, lesquels exercent ainsi sur la semelle **12** un effort important (de plusieurs centaines de Newton) dirigé **axialement** à l'opposé de la sellette **4.**

La sellette **4** comporte un corps **19** central cylindrique pourvu en son centre, du côté d'une face **20** supérieure du corps, d'une succession d'alésages formant un logement **21** pour une partie femelle **22** du raccord fluidique **15.** Ce **logement 21** définit une chambre **23** d'arrivée, dans laquelle débouche un canal d'arrivée du fluide caloporteur, percé dans le corps **19,** et un chambre **24** d'évacuation dans laquelle débouche un canal (non représenté) d'évacuation du fluide, également percé dans le corps **19.** Un perçage **25** désaxé, propre à recevoir le pion **11** de centrage de la partie mâle **6,** est réalisé dans la face **20** supérieure à distance du logement **21** central.

La partie femelle **7** du dispositif **3** de fixation comprend un mécanisme **26** de verrouillage mutuel du fond de moule **1** et de la sellette **4,** qui comporte une cage **27** tubulaire périphérique entourant le corps **19** avec lequel elle forme un ensemble monobloc. La cage **27** est d'un diamètre supérieur au corps **19,** de sorte qu'est défini entre la cage **27,** extérieure, et le corps **19,** intérieur, un espace **28** annulaire qui débouche sur la face supérieure **20,** et qui est fermé du côté opposé par un fond **29.**

La sellette **4** se prolonge radialement, au-delà de la cage **27,** par une collerette **30** qui définit un épaulement **31** tourné du côté de la face supérieure **20.**

La cage **27** est percée radialement d'une rangée annulaire de trous **32.** Le mécanisme **26** de verrouillage comprend une pluralité de billes **33** logées chacune dans un trou **32.** Les trous **32** sont cylindriques et présentent vers l'intérieur un lamage 73 qui en restreint localement la section, limitant ainsi le débattement radial des billes **33** vers l'intérieur.

Le mécanisme **26** de verrouillage comprend en outre un verrou **34** monté coulissant sur la sellette **4.** Ce verrou **34** comprend une douille **35** munie d'une jupe **36** cylindrique entourant la sellette **4.** La jupe 36 se prolonge, du côté de la face supérieure **20,** par une section de moindre diamètre formée par un alésage **37** séparé de la jupe **36** par un lamage **38.** A une extrémité supérieure, au-delà de l'alésage **37,** la douille **35** présente un rétrécissement formé par un chanfrein **39** intérieur.

Le verrou **34** comprend en outre une bride **40** annulaire rapportée, emmanchée dans la jupe **36** et intercalée entre celle-ci et la cage **27,** sur laquelle elle peut coulisser. La bride **40** définit vers l'intérieur une rampe **41** tronconique à conicité tournée vers la face supérieure **20.** Un ressort **42** de rappel travaillant en compression est monté autour de la cage **27** en étant intercalé entre la bride **40** et l'épaulement **31.**

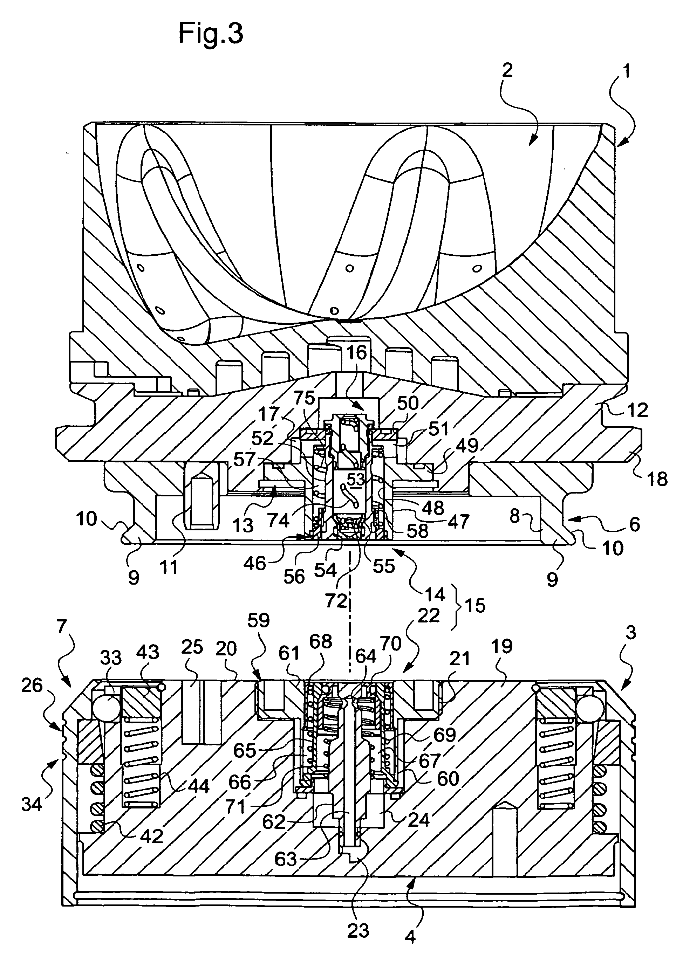

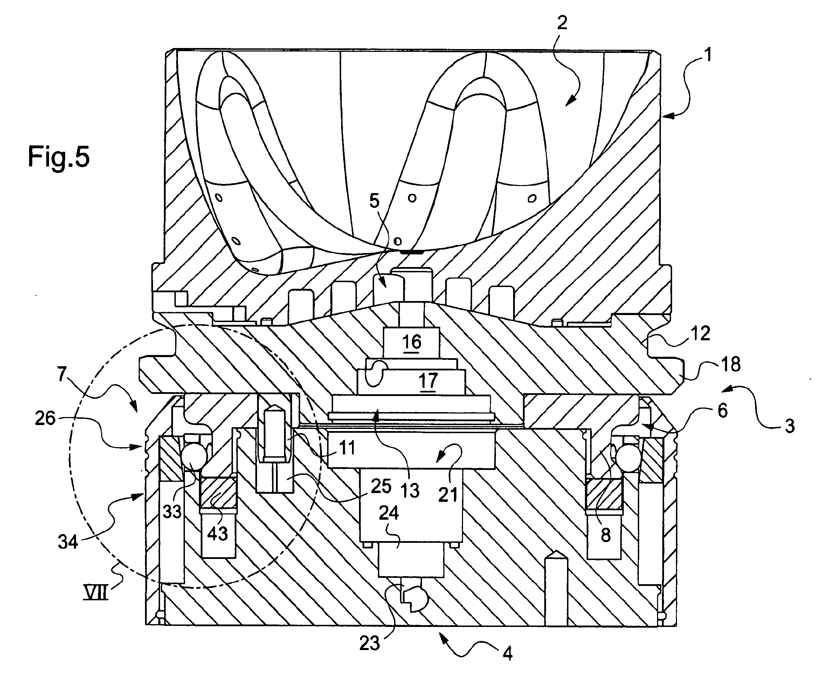

Le verrou **34** est ainsi déplaçable axialement, par coulissement de la bride **40** sur la cage **27,** entre une position de verrouillage (figures 5, 6, 7) où la rampe **41** se trouve au droit des billes **33** et exerce sur celles-ci un effort radial dirigé vers l'axe **A,** et une position de libération (figures 2, 3, 4) dans laquelle la rampe **41** est écartée axialement des billes **33,** et où l'alésage **37** se trouve au droit de celles-ci. Le ressort **42,** qui plaque la bride **40** contre le lamage **38,** sollicite en permanence le verrou **34** vers sa position de verrouillage.

Compte tenu de sa disposition périphérique, la douille **35** est accessible à la main. Le tarage du ressort **42** est de préférence choisi pour permettre un déplacement manuel du verrou **34,** à l'encontre de la force de rappel exercée par le ressort **42,** vers sa position de libération.

Le mécanisme **26** de verrouillage comprend en outre un coulisseau **43** annulaire monté dans l'espace annulaire **28** entre le corps **19** et la cage **27** et déplaçable axialement entre une position de verrouillage dans laquelle il est écarté des billes **33** (figures 5, 6,7), et une position de libération dans laquelle il se trouve au droit des billes **33** (figures 2, 3, 4). Des ressorts **44** de rappel travaillant en compression, insérés dans des trous **29** ménagés au fond de l'espace annulaire **28,** sollicitent en permanence le coulisseau **43** vers sa position de libération. Un jonc **45** annulaire est monté autour du corps **19** à une extrémité supérieure de celui-ci. Ce jonc **45** forme une butée contre laquelle le coulisseau **43** est plaqué par les ressorts **44** dans sa position de libération. Le jonc **45** limite ainsi la course du coulisseau **44** et empêche son retrait de l'espace annulaire **28.**

Il est à noter que, sur les figures 5, 6 et 7, les ressorts **42** et **44** ne sont pas représentés, à des fins de simplification.

Pour assembler le mécanisme **26** de verrouillage, on peut procéder comme suit. On commence par monter le ressort **42** autour de la cage **27.** On monte ensuite le verrou **34,** bride **40** incluse, en l'enfilant sur la cage **27.** Puis on appuie sur le verrou **34** à l'encontre du ressort **42** jusqu'à faire apparaître les logements **32** dans lesquels on introduit les billes **33.** On relâche ensuite le verrou **34,** les billes **33** étant repoussées au fond de leurs logements **32** en venant en butée contre les lamages **73.** Tout en maintenant le verrou **34** dans sa position déverrouillée, où les billes **33** peuvent sortir radialement de leurs logements **32** en venant s'appliquer contre l'alésage **37,** on monte les ressorts **44** et on introduit le coulisseau **43** dans l'espace annulaire **28** en le poussant à l'encontre du ou des ressorts **44.** Enfin, tout en maintenant le verrou **34** dans sa position de libération et le coulisseau **43** dans l'espace annulaire **28,** on monte le jonc **45** sur le corps **19** et on relâche le tout, achevant ainsi le montage, simple et rapide, du mécanisme **26.**

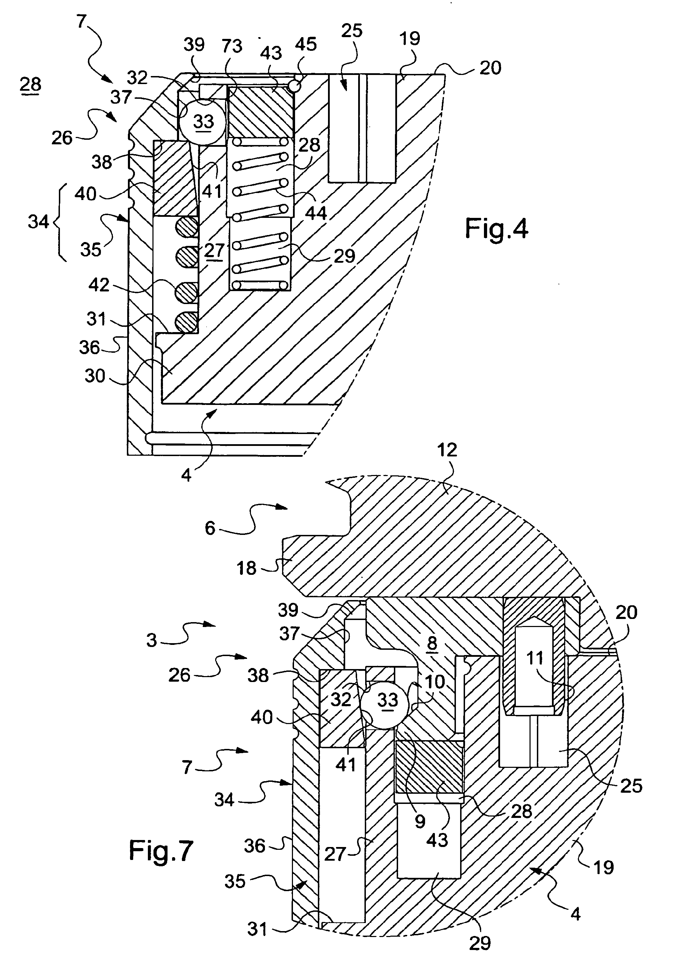

Le mécanisme **26** de verrouillage peut adopter deux configurations, selon la position du verrou **34** et du coulisseau **43 :**
- une configuration de libération (figures 2, 3, 4), dans laquelle le verrou **34** et le coulisseau **43** sont tous deux dans leur position de libération, et où les billes **33** sont maintenues entre le coulisseau **43** d'une part et l'alésage **37** de la douille **35** d'autre part. Comme cela est visible sur la figure 4, les billes **33** présentent une partie faisant saillie radialement de leur logement **32** vers l'extérieur, contre laquelle vient buter la bride **40** sous la force de rappel exercée par le ressort **42,** ce qui limite la course du verrou **34** et empêche sa séparation de la sellette **4.** Dans cette configuration, la course du verrou **34** est également limitée dans l'autre sens par le chanfrein **39,** qui comme la bride **40** (mais de l'autre côté des billes **33),** vient buter contre la partie des billes **33** en saillie. Le verrou **34** se trouve ainsi bloqué dans sa position de libération ;
- une configuration de verrouillage (figures 5, 6, 7), dans laquelle le verrou **34** et le coulisseau **43** sont tous deux dans leur position de verrouillage. Le coulisseau **43,** repoussé à l'encontre de son ressort **44** de rappel vers sa position de verrouillage et ainsi écarté des billes **33,** permet à celles-ci de se déplacer radialement vers l'axe **A,** sous la pression radiale exercée par la rampe **41.**

La fixation de la partie mâle **6** (et donc du fond de moule **1**) sur la partie femelle **7** (c'est-à-dire sur la sellette **4)** s'effectue comme suit, à partir de la configuration de libération de la partie femelle **7** (figures 2, 3, 4, 5). On commence par disposer de manière coaxiale la partie mâle **6** et la partie femelle **7,** en les orientant angulairement de sorte que le pion **11** de centrage se trouve au droit du perçage **25.** Puis on emboîte la partie mâle **6** dans la partie femelle **7,** la couronne **8** pénétrant dans l'espace annulaire **28** en repoussant le coulisseau **43** à l'encontre de la force de rappel du ressort **44.** Tant que le coulisseau **43** n'a pas atteint sa position de verrouillage, les billes **33** restent immobiles, maintenant le verrou **43** dans sa position de libération. Dès lors que le coulisseau **44** a atteint sa position de verrouillage, les billes **33** sont repoussées radialement vers l'intérieur par la bride **40** sous la poussée du ressort **42,** le verrou **43** étant brusquement déplacé dans sa position de verrouillage. Dans cette position, la rampe **41** exerce une pression radiale sur les billes **33** qui, de la sorte, viennent s'appliquer radialement contre la portée **10** tronconique de la couronne **8,** empêchant ainsi celle-ci d'être retirée de l'espace annulaire **28** et assurant la fixation de la partie mâle **6** sur la partie femelle **7.**

La saillie du lamage **73** dans le logement **32** est assez faible pour qu'en configuration verrouillée de la partie femelle **7** les billes **33,** en butée contre le lamage **73,** dépassent suffisamment de leur logement **32**pour assurer une retenue solide de la partie mâle **6,** pouvant résister à une force de traction axiale de plusieurs dizaines de Newton correspondant à la traction exercée par les demi-moules sur la semelle **12** lors de la fermeture du moule.

Pour séparer la partie mâle **6** de la partie femelle, on repousse manuellement le verrou **34** vers sa position de libération à l'encontre de la force de rappel exercée par le ressort **42.** Dès lors que le verrou **43** a atteint sa position de libération, les billes 33 sont libres de se mouvoir radialement vers l'extérieur. Sous l'effet de la force de rappel exercée par le ressort **44,** la partie mâle 6 est, par l'intermédiaire du coulisseau **43,** repoussée hors de l'espace annulaire **28,** la portée **10** tronconique repoussant les billes **33** radialement vers l'extérieur. Les billes **33** venant se loger entre le chanfrein **39** et la bride **40** bloquent le verrou **34** en position de libération tout en permettant au coulisseau **43** d'occuper à nouveau sa position de libération, la partie femelle **7** retrouvant ainsi sa configuration de libération.

On décrit à présent le raccord fluidique.

La parie mâle **14,** montée dans le logement **13** ménagé dans la semelle **12,** comporte un embout mâle **46** comprenant :
- un manchon **47** tubulaire s'étendant en saillie et muni d'un alésage **48** central,
- une collerette **49** par laquelle l'embout **46** est fixé sur la semelle **12,**
- une tête **50** cylindrique munie de trous **51** radiaux traversants, débouchant à la fois dans l'alésage **48** et dans la chambre **17** d'évacuation.

La partie mâle **14** comporte en outre une chemise **52** montée coaxialement dans l'embout **46.** La chemise **52** présente un alésage **53** central traversant, qui s'ouvre à une extrémité inférieure et débouche, à une extrémité supérieure opposée, dans la chambre d'arrivée **16.**

La partie mâle **14** comprend de plus un clapet **54** mobile monté coulissant dans l'alésage **53** de la chemise **52,** à l'extrémité inférieure de celle-ci. Dans une configuration fermée de la partie mâle **14,** le clapet **54,** repoussé par un ressort **74** travaillant en compression, est en appui contre un siège **55** tronconique interne de la chemise **52,** dont il obture l'extrémité inférieure de l'alésage **53.**

La partie mâle **14** comprend enfin un piston **56,** monté coulissant dans un espace **57** annulaire défini entre la chemise **52** et le manchon **47.** Dans la configuration fermée de la partie mâle **14,** le piston **56,** repoussé par un ressort **75** travaillant en compression, est en appui contre un siège **58** tronconique externe de la chemise **52,** obturant l'espace **57** annulaire.

La partie femelle **22** comporte quant à elle un embout femelle **59,** comprenant un manchon **60** tubulaire surmonté d'une collerette **61** par laquelle l'embout **59** est vissé dans le corps **19** de la sellette **4.**

La partie femelle **22** comporte en outre une tige **62** centrale creuse montée coaxialement dans l'embout femelle **59** et vissée dans le corps **19** au fond du logement **21.** La tige **62** est munie d'un alésage **63** qui débouche, à une extrémité inférieure, dans la chambre d'arrivée **23.** A une extrémité supérieure, la tige **62** est percée de trous **64** radiaux traversants qui débouchent dans l'alésage **63.**

La partie femelle **22** comporte aussi un fourreau **65,** monté coaxialement dans l'embout **59,** entre le manchon **60** et la tige **62,** avec lesquels le fourreau **65** définit respectivement un espace **66** annulaire externe, et un espace **67** annulaire interne qui débouche dans la chambre d'évacuation **24.**

La partie femelle **22** comporte également un coulisseau **68,** monté mobile axialement dans l'espace **66** annulaire externe. Dans une configuration fermée de la partie femelle **22,** le coulisseau **68** occupe une position fermée dans laquelle il obture l'espace **66** annulaire externe. Un ressort **69** monté dans l'espace **66** annulaire externe sollicite en permanence le coulisseau **68** vers sa position fermée.

La partie femelle **22** comprend enfin une capsule **70,** montée mobile axialement dans l'espace **67** annulaire interne. Dans une configuration fermée de la partie femelle **22,** la capsule **70** occupe une position fermée dans laquelle elle obture l'espace **67** annulaire interne. Un ressort **71** monté dans l'espace **67** annulaire interne sollicite en permanence la capsule **70** vers sa position fermée.

En configuration fermée de la partie femelle **22** (configuration adoptée lorsque le fond de moule **1** et la sellette **4** sont séparés), la chambre **23** d'arrivée et la chambre **24** d'évacuation sont mises en communication via l'alésage **63** et les trous **64.** Le fluide caloporteur circule, depuis la chambre **23** d'arrivée, par l'alésage **63** à l'extrémité duquel il passe par les trous **64** dans l'espace **67** annulaire interne et revient vers la chambre **24** d'évacuation.

Lors du montage du fond de moule **1** sur la sellette **4,** la partie mâle **14** du raccord **15** fluidique s'emboîte dans la partie femelle **22.** La tige **62,** introduite dans l'alésage **53** de la chemise **52,** repousse le clapet **54** à l'encontre de son ressort **74** de rappel. Le fourreau **65,** introduit ans l'espace **57** annulaire, repousse le piston **56** à l'encontre de son ressort **75** de rappel. Réciproquement, la chemise **52,** introduite dans l'espace **67** annulaire interne, repousse la capsule **70.** Le manchon **60,** introduit dans l'espace **66** annulaire externe, repousse le coulisseau **68.**

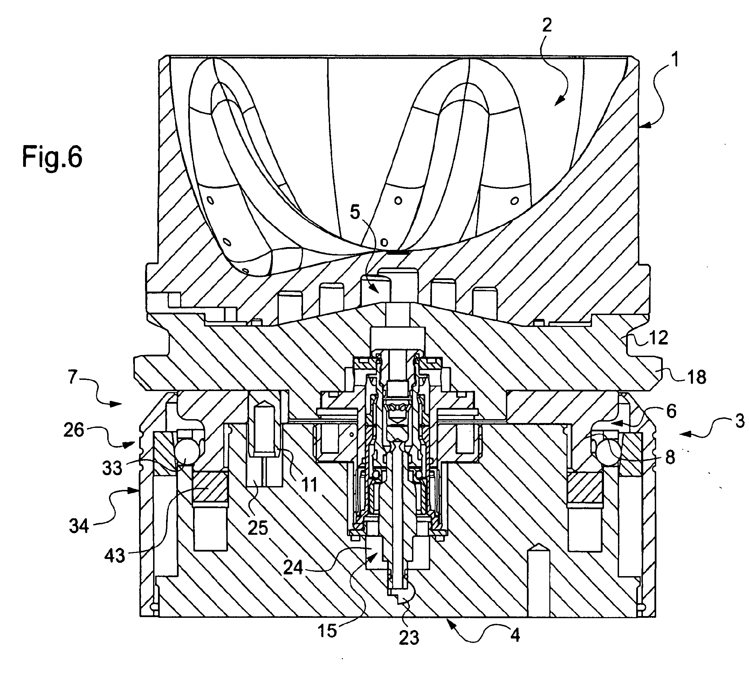

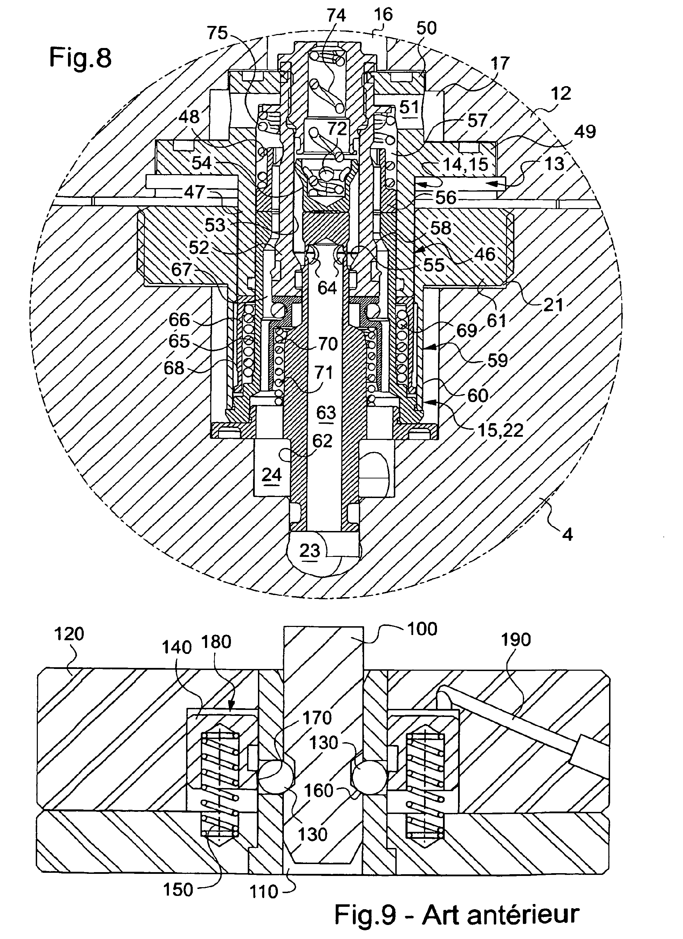

La partie mâle **14** et la partie femelle **22,** ainsi emboîtés, adoptent tous deux une configuration ouverte (figures 6 et 8) dans laquelle :
- les trous **64** radiaux de la tige **62** débouchent dans l'alésage **53** de la chemise **52,** mettant ainsi en communication les chambres d'arrivée **16, 23** de la sellette **4** et de la semelle **12,** ce qui permet l'alimentation du conduit **5** du fond de moule **1** en fluide caloporteur ;
- la capsule **70,** repoussée au-delà des trous **64** de la tige **62,** isole son alésage **63** de l'espace **67** annulaire interne (en d'autre termes, la capsule **70** isole l'arrivée de fluide de son évacuation) ;
- l'espace **66** annulaire interne de l'embout femelle **59** est mis en communication avec l'espace annulaire **57** de l'embout mâle **46,** ce qui permet l'évacuation du fluide caloporteur en provenance du conduit **5** du fond de moule **1.**

A l'arrivée, le fluide passe par l'alésage **63** de la tige **62,** sort par les trous **64** dans l'alésage **53** dans la chemise **52,** transite par des trous **72** radiaux percés dans le clapet **54** et rejoint le conduit **5** du fond de moule **1** via la chambre d'arrivée **16.**

A l'évacuation, le fluide passe par la chambre **17** d'évacuation, débouche dans l'espace **57** annulaire de l'embout mâle **46** par les trous **51** radiaux, poursuit son chemin par l'espace **67** annulaire interne avant de rejoindre la chambre **24** d'évacuation.

Le raccord **15** qui vient d'être décrit permet, on l'a vu, une arrivée et une évacuation coaxiales du fluide caloporteur. Il est ainsi possible de monter ce raccord **16** au centre de la sellette **4** et de la semelle **14,** au bénéfice de la compacité de l'ensemble.

## Revendications

1. Dispositif comprenant:
- un fond de moule (1) présentant, sur une face supérieure, une empreinte (2) en creux correspondant à un fond de récipient,
- une couronne (8) cylindrique munie, à une extrémité opposée au fond de moule (1), d'un bourrelet (9) annulaire en saillie radiale (10) tronconique orientée vers le fond de moule, et
- un logement (13) central pour te montage d'une partie (14) d'un raccord (15) fluidique, ce dispositif étant **caractérisé en ce que**
- le bourrelet définie une portée tronconique.

2. Dispositif selon la revendication 1, qui comprend en outre un conduit (**5**) pour la circulation d'un fluide caloporteur.

3. Dispositif selon la revendication 2, dans lequel le conduit (**5**) est creusé en spirale dans une face inférieure du fond de moule (**1**).

4. Dispositif selon la revendication 2 ou 3, dans lequel le logement (**13**) central se prolonge par une chambre (**16**) d'arrivée de fluide débouchant dans une portion centrale du conduit (**5**).

5. Dispositif selon l'une des revendications 2 à 4, dans lequel une portion périphérique du conduit (**5**) est reliée au logement (**13**) par un canal pour former une chambre (**17**) d'évacuation du fluide.

6. Dispositif selon l'une des revendications 1 à 5, qui comprend une semelle (**12**) sur laquelle sont fixés, à l'opposé l'un de l'autre, le fond de moule (**1**) et la couronne (**8**).

7. Dispositif selon la revendication 6, dans lequel le logement (**13**) central est formé dans la semelle (**12**).

8. Dispositif selon la revendication 6 ou 7. dans lequel la semelle (**12**) présente sur son pourtour une collerette (**18**).

9. Dispositif selon l'une des revendications 1 à 8, qui comprend un pion (**11**) de centrage désaxé.

10. Dispositif selon l'une des revendications 1 à 9, dans lequel le logement (**13**) central est formé d'une succession d'alésages.

## Claims

1. Device comprising:
- a mould bottom (1) having, on an upper face, a hollow cavity (2) corresponding to a container bottom,
- a cylindrical ring (8) equipped, at an opposite end to the mould bottom (1) with a radially projecting annular lip (9) defining a frustoconical bearing surface (10), and
- a central housing (13) in which to fit a part (14) of a fluidic coupling (15),
this device being **characterized in that**
- the lip (9) defines a frustoconical bearing surface (10) directed towards the mould bottom (1).

2. Device according to Claim 1 which further comprises a duct (5) in which a heat-transfer fluid can circulate.

3. Device according to Claim 2, in which the duct (5) is hollowed in a spiral in a lower face of the mould bottom (1).

4. Device according to Claim 2 or 3, in which the central housing (13) is extended by a fluid inlet chamber (16) opening into a central portion of the duct (5).

5. Device according to one of Claims 2 to 4, in which a peripheral portion of the duct (5) is connected to the housing (13) by a channel to form a fluid discharge chamber (17).

6. Device according to one of Claims 1 to 5 which comprises a base plate (12) to which are fixed, on opposite sides to one another, the mould bottom (1) and the ring (8).

7. Device according to Claim 6, in which the central housing (13) is formed in the base plate (12).

8. Device according to Claim 6 or 7, in which the base plate (12) has a flange (18) around its periphery.

9. Device according to one of Claims 1 to 8 which comprises an off-centred centring peg (11).

10. Device according to one of Claims 1 to 9, in which the central housing (13) is formed of a succession of bores.

## Patentansprüche

1. Vorrichtung, die enthält:
- einen Formboden (1), der an einer Oberseite eine Einbuchtung (2) entsprechend einem Behälterboden aufweist,
- einen zylindrischen Ring (8), der an einem dem Formboden (1) entgegengesetzten Ende mit einem radial vorstehenden, ringförmigen Wulst (9) versehen ist, der eine kegelstumpfförmige Auflagefläche (10) definiert, und
- eine zentrale Aufnahme (13) für den Einbau eines Teils (14) eines fluidischen Anschlusses (15),
wobei diese Vorrichtung **dadurch gekennzeichnet ist, dass**
- der Wulst (9) eine zum Formboden (1) gerichtete kegelstumpfförmige Auflagefläche (10) definiert.

2. Vorrichtung nach Anspruch 1, die außerdem eine Leitung (5) für die Zirkulation eines Wärmetxägerfluids enthält.

3. Vorrichtung nach Anspruch 2, wobei die Leitung (5) spiralförmig in einer Unterseite des Formbodens (1) ausgehöhlt ist.

4. Vorrichtung nach Anspruch 2 oder 3, wobei die zentrale Aufnahme (13) sich durch eine Fluidzufuhrkammer (16) verlängert, die in einen zentralen Abschnitt der Leitung (5) mündet.

5. Vorrichtung nach einem der Ansprüche 2 bis 4, wobei ein Umfangsabschnitt der Leitung (5) durch einen Kanal mit der Aufnahme (13) verbunden ist, um eine Abfuhrkammer (17) des Fluids zu bilden.

6. Vorrichtung nach einem der Ansprüche 1 bis 5, die eine Grundplatte (12) enthält, an der der Formboden (1) und der Ring (8) einander gegenüberliegend befestigt sind.

7. Vorrichtung nach Anspruch 6, wobei die zentrale Aufnahme (13) in der Grundplatte (12) geformt ist.

8. Vorrichtung nach Anspruch 6 oder 7, wobei die Grundplatte (12) an ihrem Umfang einen Kragen (18) aufweist.

9. Vorrichtung nach einem der Ansprüche 1 bis 8, die einen axial verschobenen Zentrierstift (11) aufweist.

10. Vorrichtung nach einem der Ansprüche 1 bis 9, wobei die zentrale Aufnahme (13) von einer Folge von Bohrungen geformt wird.
